Europäisches Patentamt

European Patent Office

Office européen des brevets

(19)

(11) Veröffentlichungsnummer : **0 131 288**
**B1**

# EUROPÄISCHE PATENTSCHRIFT

(12)

(45) Veröffentlichungstag der Patentschrift :
15.03.89

(21) Anmeldenummer : 84107944.5

(22) Anmeldetag : 06.07.84

(51) Int. Cl.⁴ : **G 06 F 13/36**, **H 04 Q   3/545**,
**G 06 F 15/16**

(54) Anordnung zur Informationsübertragung zwischen Mikrorechnern in einem dezentralen Prozesssteuersystem, insbesondere für Fernsprechanlagen.

(30) Priorität : 07.07.83 DE 3324504

(43) Veröffentlichungstag der Anmeldung :
16.01.85 Patentblatt 85/03

(45) Bekanntmachung des Hinweises auf die Patenterteilung : 15.03.89 Patentblatt 89/11

(84) Benannte Vertragsstaaten :
AT FR GB

(56) Entgegenhaltungen :
EP--A-- 0 021 287
DE--A-- 3 136 355
US--A-- 3 480 914
HEWLETT-PACKARD JOURNAL, Palo Alto, Californie, US, Band 24, Nr. 2, Oktober 1972, Seiten 2-7; G.E. NELSON et al.: "A practical interface system for electronic instruments"

(73) Patentinhaber : ALCATEL N.V.
Strawinskylaan 537 (World Trade Center)
NL-1077 XX Amsterdam (NL)

(72) Erfinder : Hornburger, Detlev
Rethwiese 7
D-2080 Pinneberg (DE)
Erfinder : Schaffert, Albrecht
Rotebühlstrasse 154
D-7000 Stuttgart 1 (DE)
Erfinder : Schneider, Henner, Dr.
Buchenweg 11
D-6110 Dieburg (DE)

(74) Vertreter : Villinger, Bernhard, Dipl.-Ing. et al
Standard Elektrik Lorenz AG Patent- und Lizenzwesen Postfach 30 09 29
D-7000 Stuttgart 30 (DE)

**Beschreibung**

Die Erfindung betrifft eine Anordnung zur Informationsübertragung zwischen Mikrorechnern in einem dezentralen Prozeßsteuersystem nach dem Oberbegriff des Anspruchs 1.

Wie in der Zeitschrift « Elektrisches Nachrichtenwesen », Band 52, Nr. 3, 1977, S. 231-236, beschrieben, wurden in Prozeßsteuersystemen die bisher verfügbaren Prozessoren und Speicher bei stärkerer Zentralisierung wirtschaftlicher ; daher wurden schnellere und größere Zentralsteuereinheiten verwendet, deren Kosten langsamer als ihre Leistungsfähigkeit stiegen. Die Ausnützung einer Zentralsteuereinheit für eine Vielzahl von Aufgaben bedingt aber grundsätzlich, daß die Aufgaben zeitlich nacheinander vom Prozessor abgearbeitet werden. Dazu müssen die teilweise parallel anfallenden Aufgaben vor dem Prozessor in eine zeitliche Sequenz gebracht und die Ergebnisse an parallele Abnehmer verteilt werden. Hierbei entstehen besondere Probleme wie die Betriebsorganisation für die zeitgerechte Bearbeitung der Aufgaben, die Unterbrechung laufender Programme durch Aufgaben mit höherer Priorität und Maßnahmen zur Vermeidung von Ausfällen des Zentralprozessors. Weitere Probleme bestehen in dem hohen Aufwand für den Grundausbau einer Zentrale und dem Flexibilitätsmangel bei der Anpassung an die jeweilige Ausbaustufe. Diese Probleme zeigen Grenzen der zentralisierten Rechneranwendung auf.

Oft treten Aufgaben nicht nur sequentiell sondern auch parallel auf, wie z. B. in Fernsprechvermittlungszentralen die Bearbeitung der Teilnehmerwünsche. Mit Mikrorechnern besteht die Möglichkeit, die speicherprogrammierte Verarbeitung dezentral im Gesamtsystem dort einzusetzen, wo die Aufgaben anfallen. Dabei werden die Mikrorechner im Verbundbetrieb eingesetzt. Jeder Mikrorechner bearbeitet einen Anteil der Steuerungsaufgaben des Gesamtsystems.

Solche dezentrale Prozeßsteuersysteme verbessern im allgemeinen den Durchsatz, die Flexibilität, die Verfügbarkeit und die Zuverlässigkeit.

Aus der DE-OS 32 12 556 ist eine dezentral gesteuerte Vermittlungsanlage bekannt, die nach dem Oberbegriff des Anspruchs 1 aufgebaut ist. Der Datenbus besteht beispielsweise aus acht Einzelleitungen für die parallele Datenübertragung und aus zwei einadrigen Steuerbussen. Sämtliche für den Aufbau, das Halten und Auslösen einer Verbindung erforderlichen, vermittlungstechnischen Daten und Signale werden über diese Busse übertragen. Die über die Bussteuerung und den Datenbus erfolgende Datenübertragung kann mit fester zyklischer Buszuteilung ohne Berücksichtigung von Prioritäten vorgenommen werden. Die Buszuteilung wird aber wiederum zentral ausgeführt, so daß Schwierigkeiten bei Ausfall dieser zentralen Buszuteilung auftreten.

Durch die DE-OS 27 24 431 ist ein Vermittlungsverfahren für eine Fernmeldevermittlungsanlage mit dezentraler Steuerung bekannt, bei dem von jeder dezentralen Steuerung die Zustände von allen anderen dezentralen Steuerungen fortlaufend übernommen werden, die für den Verbindungsaufbau der Anschlußeinrichtungen bedeutend sind und bei dem von den dezentralen Steuerungen zum Aufbau der Verbindungen Steuerbefehle zu peripheren Einrichtungen oder anderen dezentralen Steuerungen abgegeben werden, die die bereits gespeicherten aktuellen Zustände der restlichen dezentralen Steuerungen berücksichtigen. Für die Zusammenarbeit der Steuerungen untereinander werden eine mehradrige Meldeleitung, eine gesonderte Steuerleitung, eine mehradrige Anschalteleitung sowie eine Fortschalteleitung verwendet. Die Meldeleitung wird von einer dezentralen Steuerung nur solange in Anspruch genommen, wie sie zur Abgabe durch die gerade sendende bzw. zur Aufnahme durch die empfangende Datenstation benötigt wird. Die gesonderte Steuerleitung übermittelt den nicht sendenden dezentralen Steuerungen von der gerade sendenden dezentralen Steuerung eine Aufforderung zum Lesen der auf der Meldeleitung gesendeten Meldung und überträgt von den empfangenden dezentralen Steuerungen die Mitteilung, daß die Bearbeitung der gesendeten Meldungen durch sie noch nicht abgeschlossen ist. Die Fortschalteleitung verbindet die dezentralen Steuerungen ringförmig miteinander und überträgt Signale in der Weise, daß die nachfolgende dezentrale Steuerung für den Sendezustand vorbereitet wird, sobald der Sendevorgang der vorausgehenden dezentralen Steuerung auf der Meldeleitung beendet ist. Dabei ist ein zentraler Zähler vorgesehen, der nach der für eine vorgegebene Sicherheitszeit andauernden Abwesenheit eines Signals auf der gesonderten Steuerleitung oder der Meldeleitung schrittweise und zyklisch fortzählt, wobei jeder Zahl der möglichen Zählerstände eine bestimmte dezentrale Steuerung zugeordnet ist und wobei der Zählausgang über einen Decoder und eine Anschalteleitung mit den einzelnen Datenstationen verbunden ist und diese nacheinander in den Sendezustand schaltet.

Auch hier ist ein zentrales Glied, der Zähler, vorhanden, der besondere Sicherheitsprobleme aufwirft. Außerdem werden für die Informationsübertragung zwischen den dezentralen Steuerungen viele Leitungsadern benötigt.

Ferner ist durch die DE-OS 27 08 244 ein Verfahren zur Steuerung eines Vermittlungssystems mit einer Gruppe von Kleinrechnern bekannt, die jeweils mit einer Gruppe von voneinander unabhängigen Mikrorechnern verbunden sind und mit einem zur Prioritätssteuerung dienenden Leitrechner in Verbindung stehen. Die Kleinrechner sind mittels eines Busses untereinander verbunden, über den Informationen zunächst auf den Kleinrechnern zugeordnete Pufferspeicher gegeben werden. Diese Pufferspeicher dienen dazu, die Signalflüsse zwischen den Rechnern und dem Bus anzupassen, da die an den Bus angeschlossenen Organe die Signale nur an genau festgelegten Zeitpunkten empfangen oder abgeben können. Im Falle einer Fernsprechvermittlung mit Zeitmultiplexbetrieb wird ein Rahmen mit 32 Kanälen zur Informationsübertragung über den Bus verwendet. Bei einer Ausführung sind für jeden Rechner von insgesamt 16 Rechnern zwei Kanäle reserviert, von denen der eine die Adresse des Kleinrechners und der andere die eigentlichen Informationen erhält. Eine Adressenvergleichsschaltung für jeden Kleinrechner stellt diejenigen Informationen fest, die für den zugeordneten Kleinrechner bestimmt sind. Diese systematische Reservierung einer Sendezeit für jeden Kleinrechner ist manchmal jedoch nicht an die Verkehrsbedingungen angepaßt. Deshalb wird vorgeschlagen, die Zuteilung der Informationsübertragungszeiten mit Hilfe des Leitrechners vorzunehmen.

Bei diesem Zeitmultiplexverfahren wird aber von einem zentralen Taktgeber Gebrauch gemacht, oder es wird ein Zentralrechner benötigt, so daß auch hier die bereits geschilderten Nachteile auftreten. Für kleinere Prozeßsteuersysteme ist das Zeitmultiplexverfahren auch zu aufwendig.

Eine weitere Vermittlungsanlage mit zentraler Steuerung und dezentralen Steuerungen ist durch die DE-OS 27 20 833 bekannt. Dort wird zur Verbindung der dezentralen Steuerungen neben dem eigentlichen Datenbus ein zusätzlicher Adressenbus vorgeschlagen, so daß wieder eine Vielzahl von Steuerleitungen vorhanden ist. Außerdem ist ein verhältnismäßig großer Hardware- und Software-Aufwand zur Steuerung der Informationsübertragung, insbesondere zur Steuerung der Busbelegung, erforderlich, wodurch ein wirtschaftlicher Einsatz, insbesondere in kleineren Anlagen, in Frage gestellt ist.

Durch den Aufsatz « A systematic approach to the design of digital bussing structure », Fall Joint Computer Conference, 1972, Seiten 719 bis 732, insbesondere Seite 724 mit Fig. 11, ist eine dezentrale Abfrage von Einrichtungen beschrieben, wobei diese u. a. mittels einer Anzahl von Adern zur Übertragung eines Abfragecodes und mittels zweier Steuerbusse untereinander verbunden sind. Jede Einrichtung ist mit einer Adresse versehen. In jeder Einrichtung sind auch die Adressen der anderen Einrichtungen gespeichert. Bei der Einschaltung der Einrichtungsanlage wird nur eine Einrichtung als erster Busbenutzer zugelassen. Wenn eine Einrichtung die Bussteuerung aufgeben möchte, gibt sie einen Adreßcode auf die Abfrageadern und bewirkt damit ein Freizeichen auf dem einen Steuerbus. Wenn der Adreßcode dem einer den Bus anfordernden anderen Einrichtung entspricht, belegt diese andere Einrichtung als Zeichen der Annahme den zweiten Steuerbus. Die erste Einrichtung gibt dann die Abfrageadern und den ersten Steuerbus frei, während die zweite Einrichtung mit der Busbenutzung beginnt. Wenn die erste Einrichtung auf dem zweiten Steuerbus kein Annahmezeichen erhält, so wählt sie einen anderen Adreßcode für eine andere Einrichtung. Diese Anlage erreicht zwar eine größere Zuverlässigkeit, weil eine fehlerhafte Einrichtung die Busoperationen möglicherweise nicht stört, aber es sind wieder eine Vielzahl von Bussen und Steueradern nötig.

Ferner ist durch die Zeitschrift Electronics, 20. Januar 1977, Seiten 102 bis 110, bekannt, Mikroprozessoren über zwei Busse miteinander zu verbinden, wobei der eine Bus ein doppeltgerichteter Datenbus und der andere ein Synchronisierbus zur Datensignalsynchronisierung ist. Der durch den sendenden Mikrorechner gesteuerte Synchronisierbus ist mit Interrupteingängen aller Mikrorechner verbunden. Zur Steuerung der Datenübertragung kann jeder Mikrorechner über den Synchronisierbus eine Unterbrechungsanforderung an jeden Mikrorechner leiten. Alle nicht an einer Datenübertragung interessierten Mikrorechner können ihre Interrupteingänge sperren. Jeder Mikroprozessor kann Prüfinformationsteile empfangen und das Informationsformat verstehen, so daß eine zuverlassige Informationsübertragung gesichert ist. Über die Zusammenarbeit der Mikrorechner im einzelnen ist nichts ausgesagt.

Die Aufgabe der Erfindung besteht darin, eine Anordnung der im Oberbegriff des Anspruchs genannten Art anzugeben, die mit einem einfachen Bussystem mit möglichst wenigen Leitungen und mit minimalen Steuerungsaufwand auskommt, die trotzdem eine große Flexibilität, insbesondere hinsichtlich der Zahl der angeschlossenen Einheiten, zuläßt und die durch Vermeidung zentraler Steuereinrichtungen zuverlässig arbeitet.

Diese Aufgabe wird mittels der im Anspruch 1 gekennzeichneten Merkmale gelöst. Mit der Erfindung ist ein Informationsbus möglich, der aus einem Steuerungsteil mit nur zwei Steuerleitungen und einem Datenteil mit acht Datenleitungen auskommt. Dabei ergibt sich der Vorteil, daß alle mit dem Informationsbus verbundenen Rechnerbaugruppen den genau gleichen Aufbau haben können.

Die Erfindung wird nun anhand eines Ausführungsbeispiels näher erläutert. Es zeigen :

Fig. 1 Schaltungsanordnungen zweier exemplarischer Mikrorechner mit ihren Busverbindungen gemäß der Erfindung,

Fig. 2 eine Schaltungsanordnung einer Fernmeldevermittlungsanlage, in der das Bussystem gemäß der Erfindung eingesetzt werden kann,

Fig. 3 eine übersicht über eine Formatierung der Datenübertragung und

Fig. 4 ein Zeitdiagramm für das Aussenden der Rechnerbotschaften der einzelnen Mikrorechner.

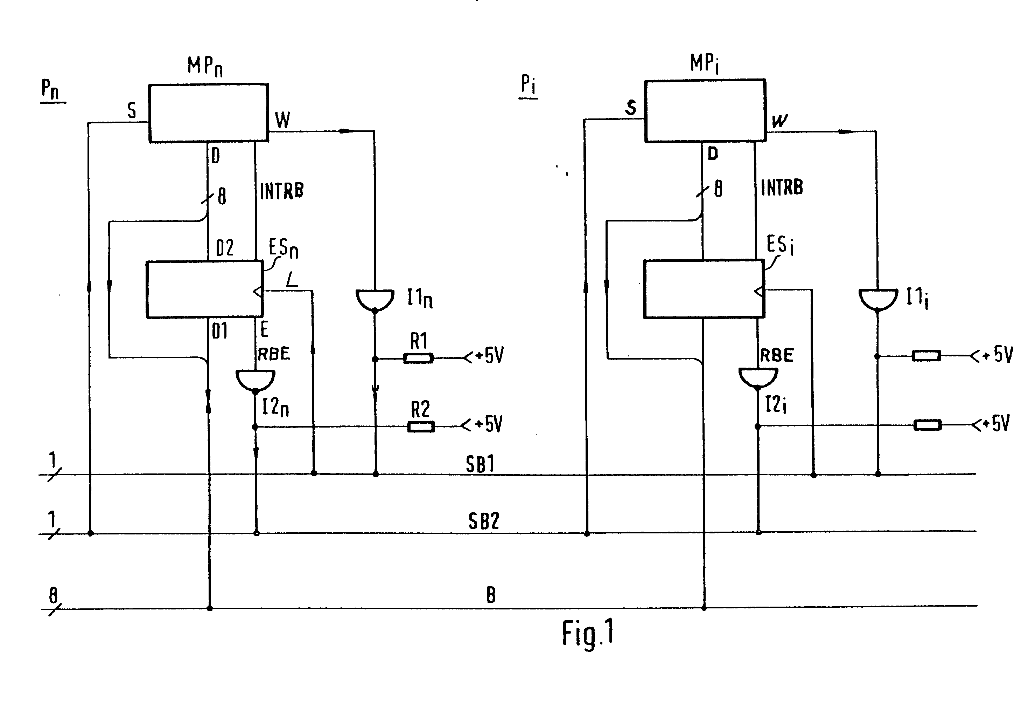

In Fig. 1 sind zwei Mikrorechner $P_n$ und $P_i$ dargestellt, von denen der erste aus einem Mikroprozessor $MP_n$, einem Empfangsspeicher $ES_n$ und zwei Invertern $I1_n$, $I2_n$ aufgebaut ist. Der Mikroprozessor $MP_n$ ist über seinen Lesebefehlsausgang W und dem Inverter $I1_n$ an einen einadrigen Steuerbus SB1 angeschlossen. Der Ausgang dieses Inverters liegt über einen Widerstand R1 an der positiven Klemme einer Spannungsquelle von 5V. Der Steuerbus SB1 ist mit dem Lesebefehlseingang L des Empfangsspeichers $ES_n$ verbunden. Ein über den Leer- und Vollzustand des Empfangsspeichers Signale abgebender Ausgang E des Empfangsspeichers $ES_n$ ist über den Inverter $I2_n$ an einen zweiten einadrigen Steuerbus SB2 angeschlossen, der wiederum mit dem Sendebefehlseingang S des Mikroprozessors $MP_n$ verbunden ist. Der Ausgang des Inverters $I2_n$ liegt über einen Widerstand R2 an der positiven Klemme der Spannungsquelle von 5V. Ferner ist ein achtadriger Datenbus B zum Empfang der Daten an den Eingang D1 des Empfangsspeichers $ES_n$ angeschlossen, der diese Daten über seinen Datenausgang D2 an den Dateneingang bzw. Datenausgang D des Mikroprozessors $MP_n$ abgibt. Zur Sendung von Daten vom Mikroprozessor $MP_n$ zum Datenbus B ist der Empfangsspeicher $ES_n$ umgehbar. Schließlich ist noch eine Verbindung INTRB vom Empfangsspeicher $ES_n$ zum Mikroprozessor $MP_n$ vorhanden, über die vom Empfangsspeicher aus eine Interruptanforderung ausgeht.

Die weiteren Mikrorechner haben den gleichen Aufbau und die gleichen Verbindungen wie der Mikrorechner $P_n$. Die entsprechenden Bezeichnungen der Bauteile des weiteren, exemplarisch dargestellten Mikrorechners $P_i$ tragen anstelle des Index n den Index i.

In den folgenden Erläuterungen der Arbeitsweise wird davon ausgegangen, daß zunächst maximal 32 Mikrorechner $P_0$ bis $P_{31}$ zugelassen seien. Vorausgesetzt ist ferner, daß jeder Mikrorechner eine Adresse zugeteilt erhält, die z. B. über einen DIL-Schalter auf der Baugruppe eingestellt werden kann und dem Mikrorechner über einen entsprechenden, nicht dargestellten I/O-Port (Eingangs/Ausgangs-Anschluß) zur Verfügung steht, daß weiter eine eigene Takterzeugung für den Rechnertakt, aus dem auch ein 8 ms-Interrupt abgeleitet wird, und ein RESET-Kreis, der sogenannte Power-On-Reset, je Mikrorechner vorhanden ist. Als Port werden Anschlüsse des Mikrorechners verstanden, über die wählbar sowohl Eingangsinformationen empfangen als auch Ausgangsinformationen abgegeben werden können.

Nach der Einschaltung des Betriebsstromes und der nachfolgenden Rückstellung der Schaltkreise in die Ausgangsposition mittels des Befehls RESET liest jeder Mikrorechner die für ihn eingestellte Adresse ($P_0$ bis $P_{31}$). Aufgrund eines besonderen Anfangsprogramms werden die Mikrorechner $P_1$ bis $P_{31}$ den Datenbus B zunächst nicht belegen, sondern auf eine entsprechende Aufforderung des Mikrorechners $P_0$ warten. Damit soll eine zyklische Buszuteilung erreicht werden. Als erster Mikrorechner ist also $P_0$ berechtigt, nach dem RESET den Datenbus B als Sender zu belegen und Daten zu anderen Mikrorechnern zu übertragen. Für die Datenübertragung kann ein einheitliches Format festgelegt werden.

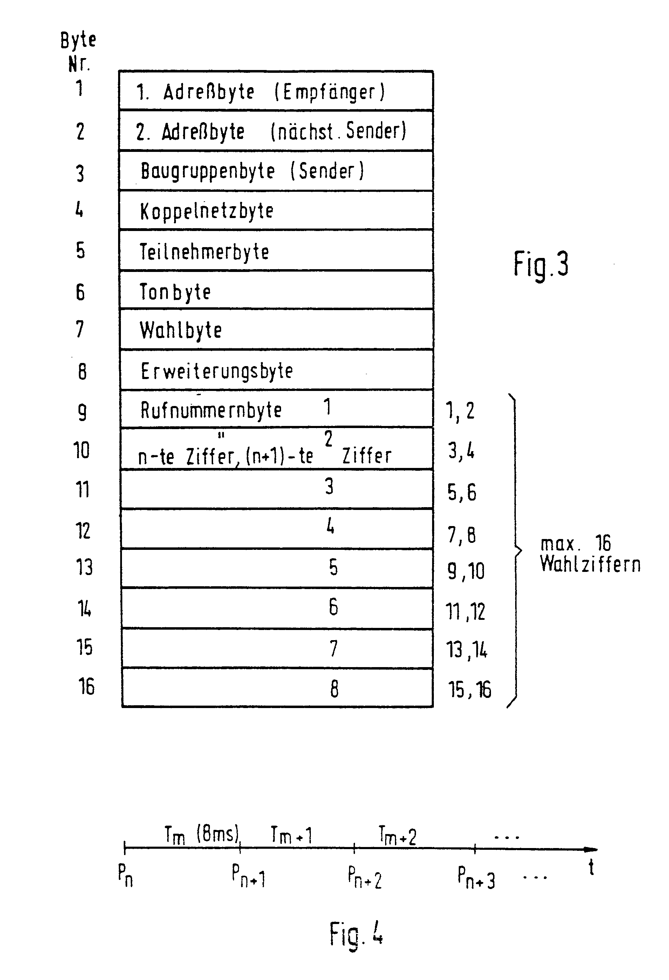

Wie in Fig. 3 dargestellt ist, soll eine Rechnerbotschaft im Normalfall aus 16 Bytes (1 Byte = 8 bit) bestehen. Das in Fig. 3 zugrundegelegte Format ist auf ein Anwendungsbeispiel für eine Fernsprechvermittlungsanlage bezogen. Es versteht sich von selbst, daß das hier dokumentierte Grundprinzip auch für andersgeartete Fälle anwendbar ist. Der zeitliche Ablauf der Aussendung der von den einzelnen Mikrorechnern über den Datenbus abzugebenden Botschaften ist in Fig. 4 skizziert.

Hat der Mikrorechner $P_n$ in einem Zeitintervall $T_m$ seine Botschaft ausgesandt, so soll im nächstfolgenden Zeitintervall $T_{m+1}$ der Mikrorechner $P_{n+1}$ senden. Da die Bytes 1 und 2 der Botschaft von allen Mikrorechnern gelesen werden müssen, ist jedem Mikrorechner der nächstfolgende Mikrorechner $P_{n+1}$ bekannt. Bei ebenfalls bekanntem Zeitintervall T, z. B. 8 ms, kann sogar jeder Mikrorechner ermitteln, wann er die Buszuteilung erhält. Dadurch können auch nichtbestückte oder defekte Baugruppen erkannt werden. Es besteht sogar die Möglichkeit, daß jeder Mikrorechner nach einem Systemumlauf die momentane Konfiguration des Systems lernt und danach den nächsten Sender $P_{n+1}$ selbstständig anspricht.

Die Informationsübertragung zwischen den gleichberechtigten Mikrorechnern läuft im einzelnen folgendermaßen ab. Der sendende Mikrorechner $P_i$ gibt seine Daten an den Bus B ab. Wenn an den Ausgängen W aller Mikroprozessoren eine Leseaufforderung abgegeben wird, werden diese Daten in den Empfangsspeichern eingeschrieben. Davon wird nun ein Interruptsignal INTRB individuell für jeden Mikrorechner erzeugt, welches das gerade laufende Programm der Mikrorechner unterbricht und den Sprung in ein Unterprogramm veranlaßt. Dieses Unterprogramm bewirkt das Lesen des Empfangsspeichers, so daß die gesendeten Daten nun den Mikrorechnern zur Weiterverarbeitung zur Verfügung stehen.

Parallel mit dem Interrupt wird ein weiteres Steuersignal am Ausgang E erzeugt, nämlich ein den Leerzustand des Empfangsspeichers und die Prozessorbereitschaft kennzeichnendes Signal RBE. Da nämlich die Zeit zur Beantwortung der Interruptanforderung bei den empfangenden Mikroprozessoren abhängig vom momentanen Programmstatus unterschiedlich sein wird, darf der sendende Mikroprozessor erst dann ein neues Datenbyte in die Empfangsspeicher einschreiben, wenn der Mikrorechner sein entsprechendes RBE-Signal gesetzt hat. Steht beispielsweise ein L-Zustand am Ausgang E für den ausgespeicherten Zustand des Empfangsspeichers und ein H-Zustand für den eingespeicherten Zustand des Empfangsspeichers, so kehren sich diese Verhältnisse am Ausgang des Inverters $I2_n$ um. Solange noch ein mit dem Nullpotential der Spannungsquelle (5V) gleichbedeutender L-Zustand auf dem Steuerbus SB2 von irgendeinem Mikroprozessor verursacht wird, wird der Mikroprozessor MP nicht aufgefordert, mit dem Senden des nächsten Byte zu beginnen. Die Sendeaufforderung ergeht erst, wenn auch der letzte Mikrorechner am Ausgang seines Inverters I2 den H-Zustand abgibt.

Um bei dem jeweilig sendenden Mikrorechner keine Eigenunterbrechung zu erzeugen und demzufolge die eigenen Daten zu lesen, wird das Interruptsignal INTRB vom sendenden Mikroprozessor maskiert. Auch das RBE-Signal wird vom sendenden Mikroprozessor nicht gesetzt.

Nach dem Erhalt des ersten Interruptsignals beginnt jeder empfangende Mikrorechner mit der Zählung des Zeitintervalls T, so daß hierdurch eine Synchronisierung erfolgt. Wie bereits beschrieben, erfolgt auf diese Weise die weitere Buszuteilung, so daß auf aufwendigere Adressiervorgänge und spezielle Adressierleitungen verzichtet werden kann.

Bei den nicht direkt angesprochenen Mikrorechnern werden nur die ersten beiden Interruptanforderungen mit dem Signal RBE beantwortet; die weiteren werden zwar gegebenenfalls aufgenommen bzw. mitgezählt, aber nicht mit dem Signal RBE beantwortet.

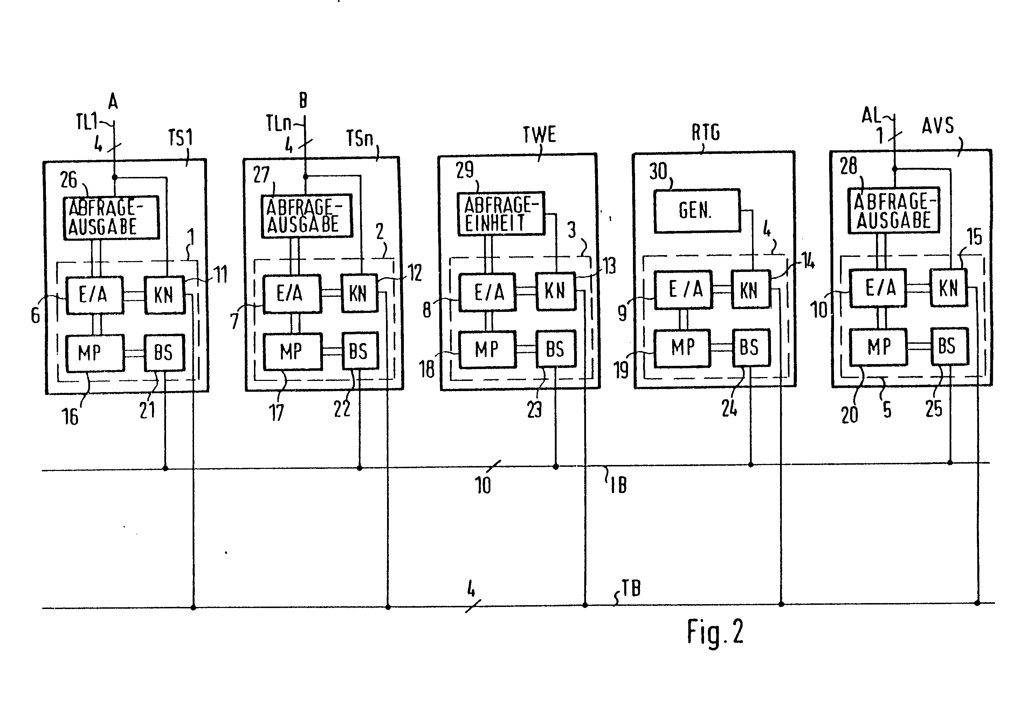

Die Fig. 2 zeigt ein Anwendungbeispiel der Erfindung in einer Fernsprechnebenstellenanlage. Aus der Darstellung ist deutlich der durch die Erfindung geförderte, vereinheitlichte, modulare Aufbau des Vermittlungssystems mit dem dezentralisierten Steuerungssystem erkennbar, das aus dem Mikroprozessor MP und der Bussteuerung BS besteht. Jede der modularen Baugruppen verfügt außerdem über eine der betreffenden Aufgabe (Teilnehmerschaltung TS, Amtsverbindungssatz AVS, Tastwahlempfänger TWE, Ruftongenerator RTG) angepaßten Abfrage- und Ausgabeschaltung, eine Ein-/Ausgabe-Schaltung E/A für den Mikroprozessor und einen entsprechenden Koppelnetzanteil KN. Somit können die einzelnen durch den Informationsbus IB und den Telefonbus TB untereinander verbundenen Baugruppen, abgesehen vom externen Informationsbus, völlig selbstständig operieren. Der Informationsbus IB umfaßt die in Fig. 1 dargestellten Busse SB1, SB2 und B. Eine nach diesem Aufbauschema gestaltete Anlage kann jederzeit um weitere Baugruppen erweitert werden, ohne daß von vornherein aufwendige Vorleistungen für zentrale Steueraufgaben entstehen. Eine solche Gestaltung ist vor allem für kleinere Anlagen von erheblicher Bedeutung, da bei ihnen das Kostenverhältnis der zentralen zu den individuellen Einrichtungen ausschlaggebend zu berücksichtigen ist. Des weiteren wirkt sich das Fortfallen komplizierter zentraler Steuerungseinrichtungen, die bei kleineren Anlagen aus Kostengründen schwerlich dupliziert werden können, vorteilhaft auf die Zuverlässigkeit der Gesamtanlage aus und vereinfacht im tatsächlich eintretenden Störungsfall die Prüfungs- und Entstörungsarbeiten.

**Patentanspruch**

Anordnung zur Informationsübertragung zwischen Mikrorechnern in einem dezentralen Prozeßsteuersystem, in dem die Mikrorechner mittels eines mehradrigen Datenbusses, mittels eines ersten einadrigen Steuerbusses und eines zweiten einadrigen Steuerbusses untereinander verbunden sind und jeweils einen eigenen Rechnertaktgenerator, einen Rückstellkreis, einen Mikroprozessor und eine Bussteuerung aufweisen, insbesondere für Fernsprechanlagen, dadurch gekennzeichnet, daß

a) jedem Mikrorechner ($P_i$) als Bussteuerung ein Empfangsspeicher ($ES_i$) und zwei Inverter ($I1_i$, $I2_i$) zugeordnet sind,

b) an einem Eingangs/Ausgangs-Anschluß jedes Mikroprozessors ($MP_i$) eine diesen Mikroprozessor kennzeichnende, einstellbare Adresse zur Verfügung steht,

c) ein weiterer Eingangs/Ausgangs-Anschluß (D) jedes Mikroprozessors ($MP_i$) mit dem Datenbus (B) über den zugehörigen Empfangsspeicher ($ES_i$), der in Senderichtung umgehbar ist, so verbunden ist, daß die ersten zwei Bytes einer Botschaft von allen empfangenden Mikroprozessoren, die restlichen Bytes dieser Botschaft jedoch nur von demjenigen Mikroprozessor aus dem Empfangsspeicher gelesen werden, der die Botschaft zu verarbeiten hat, wobei das erste Byte die Adresse desjenigen Mikroprozessors enthält, der die Botschaft zu verarbeiten hat, und das zweite Byte die Adresse desjenigen Mikroprozessors enthält, der im nächsten Zyklus sendeberechtigt sein soll,

d) jeder Mikroprozessor ($MP_i$) ein Vorbereitungssignal (W) über den zugehörigen ersten Inverter ($I1_i$) an den ersten Steuerbus (SB1) abgibt,

e) jeder Empfangsspeicher ($ES_i$) mit dem ersten Steuerbus (SB1) so verbunden ist, daß er die Daten vom Datenbus (B) übernimmt und ein Interruptanforderungssignal (INTRB) an den zugehörigen Mikroprozessor sendet, wenn alle Mikroprozessoren ein Vorbereitungssignal (W) abgeben, und danach ein Rechnerbereitschaftssignal (RBE) über den zugehörigen zweiten Inverter ($I2_i$) an den zweiten Steuerbus (SB2) sendet,

f) der zweite Steuerbus (SB2) an einen Sendebefehlseingang (s) jedes Mikroprozessores ($MP_i$) angeschlossen ist, damit der sendende Mikroprozessor aufgefordert wird, das nächste Byte zu senden, wenn alle Mikrorechner ein Rechnerbereitschaftssignal (RBE) senden.

**Claim**

Arrangement for transferring information between microcomputers in a decentralized process control system wherein the microcomputers are interconnected by a multiwire data bus, a first single-wire control bus, and a second single-wire control bus and each have a microprocessor, a bus controller, a clock generator, and a resetting circuit, particularly for telephone systems, characterized in

a) that each microcomputer ($P_i$) has a receive buffer ($ES_i$) and two inverters ($I1_i$, $I2_i$) associated therewith as the bus controller,

b) that at an input/output port of each microprocessor ($MP_i$), a selectable address designating said microprocessor is available,

c) that an additional input/output port (D) of each microprocessor (MP$_i$) is connected via the associated receive buffer (ES$_i$), which can be bypassed in the transmit direction, to the data bus (B) in such a manner that the first two bytes of a message are read from the receive buffer by all receiving microprocessors, while the remaining bytes of said message are read only by that microprocessor which has to process the message, with the first byte containing the address of the microprocessor having to process the message, and the second byte containing the address of the microprocessor which is to be allowed to send in the next cycle,

d) that each microprocessor (MP$_i$) delivers a preparatory signal (W) through the associated first inverter (I1$_i$) to the first control bus (SB1),

e) that each receive buffer (ES$_i$) is connected to the first control bus (SB1) to receive the data from the data bus (B) and to send an interrupt-request signal (INTRB) to the associated microprocessor when all microprocessors deliver a preparatory signal (W), and thereafter to send a computer-ready signal (RBE) via the associated second inverter (I2$_i$) to the second control bus (SB2), and

f) that the second control bus (SB2) is connected to a send-instruction input (s) of each microprocessor (MP$_i$) to request the transmitting microprocessor to send the next byte when all microcomputers send a computer-ready signal (RBE).

**Revendication**

Agencement de transfert d'information entre microcalculateurs dans un système de commande de processus décentralisé dans lequel les microcalculateurs sont interconnectés par un bus de données à plusieurs fils, un premier bus de commande à un seul fil et un deuxième bus de commande à un seul fil, et comprenant chacun un générateur d'horloge, un circuit de ré-initialisation, un microprocesseur et un contrôleur de bus, en particulier pour les systèmes téléphoniques, caractérisé en ce que :

a) chaque microcalculateur (P$_i$) est pourvu, en tant que contrôleur de bus, d'une mémoire de réception (ES$_i$) et de deux inverseurs (I1$_i$, I2$_i$),

b) à un accès d'entrée/sortie de chaque microprocesseur (MP$_i$) une adresse modifiable désignant ledit microprocesseur est disponible,

c) un autre accès d'entrée/sortie (D) de chaque microprocesseur (MP$_i$) est connecté au bus de données (B) par la mémoire de réception associée (ES$_i$), laquelle peut être contournée dans le sens émission, de sorte que les deux premiers mots d'un message sont lus dans la mémoire de réception par tous les microprocesseurs récepteurs et que les mots suivants de ce message sont lus seulement par le microprocesseur qui doit traiter le message, le premier mot contenant l'adresse du microprocesseur devant traiter le message, tandis que le deuxième mot contient l'adresse du microprocesseur qui doit être autorisé à transmettre dans le cycle suivant,

d) chaque microprocesseur (MP$_i$) fournit un signal préparatoire (W) à travers le premier inverseur associé (I1$_i$) sur le premier bus de commande (SB1),

e) chacune des mémoires de réception (ES$_i$) est connectée au premier bus de commande (SB1) de manière qu'elle accepte les données du bus de données (B) et envoie un signal de demande d'interruption (INTRB) au microprocesseur associé, quand tous les microprocesseurs fournissent un signal préparatoire (W) et envoie ensuite un signal de disponibilité de calculateur (RBE), par le deuxième inverseur associé (I2$_i$), sur le deuxième bus de commande (SB2),

f) le deuxième bus de commande SB2 est connecté à une entrée d'ordre de transmission (s) de chaque microprocesseur (MP$_i$), grâce à quoi le microprocesseur d'émission (MP$_i$) est invité à envoyer le mot de données suivant lorsque tous les microcalculateurs envoient un signal de disponibilité de calculateur (RBE).

Fig.1

EP 0 131 288 B1

Fig. 2

EP 0 131 288 B1

Byte
Nr.

| | |
|---|---|
| 1 | 1. Adreßbyte (Empfänger) |
| 2 | 2. Adreßbyte (nächst. Sender) |
| 3 | Baugruppenbyte (Sender) |
| 4 | Koppelnetzbyte |
| 5 | Teilnehmerbyte |
| 6 | Tonbyte |
| 7 | Wahlbyte |
| 8 | Erweiterungsbyte |

| Byte Nr. | Rufnummernbyte | Ziffer |
|---|---|---|
| 9 | Rufnummernbyte        1 | 1, 2 |
| 10 | n-te Ziffer, (n+1)-te " 2 Ziffer | 3, 4 |
| 11 | 3 | 5, 6 |
| 12 | 4 | 7, 8 |
| 13 | 5 | 9, 10 |
| 14 | 6 | 11, 12 |
| 15 | 7 | 13, 14 |
| 16 | 8 | 15, 16 |

} max. 16 Wahlziffern

Fig. 3

Fig. 4

$T_m$ (8ms), $T_{m+1}$ $T_{m+2}$ ...

$P_n$ $P_{n+1}$ $P_{n+2}$ $P_{n+3}$ ... t